# EUROPEAN PATENT APPLICATION

(11) **EP 4 383 179 A1**
(43) Date of publication of application: **12.06.2024**
(21) Application number: 23211743.2
(22) Date of filing: 23.11.2023
(51) Int. Cl.: G06Q 30/0601, G06Q 40/03

(54) **METHOD AND APPARATUS FOR FACILITATING PROVISION OF MERCHANT PREQUALIFICATION AMOUNTS TO USERS**

(30) Priority: 08.12.2022 US 202218077282
(71) Applicant: Affirm, Inc., San Francisco, CA 94108 (US)
(72) Inventor: Dao, Angela, San Francisco, 94108 (US); Lagore, Chad, San Francisco, 94108 (US); Eimer, Kenny, San Francisco, 94108 (US); Sripathy, Aravind, Cupertino, 95014 (US); Lieu, Klein, San Francisco, 94108 (US); Leung, Ida, San Francisco, 94134 (US); Madani, Arman, San Francisco, 94108 (US)
(74) Representative: Piotrowicz, Pawel Jan Andrzej

(57) **Abstract**

A method of facilitating communication of proactive prequalification for financing to customers may include determining a set of eligible candidate customers for proactive loan prequalification, performing credit determinations on the set of eligible candidate customers to identify a set of selected candidates to receive a proactive guarantee of financing, communicating a qualification notification to at least some of the set of selected candidates indicating the proactive guarantee of financing, and responsive to receiving an indication of a transaction associated with the qualification notification, and meeting parameters defined in association with the qualification notification, facilitating a loan to a customer initiating the transaction.

## Description

### TECHNICAL FIELD

Example embodiments generally relate to financial industry technologies and, in particular, relate to apparatuses, systems, and methods for facilitating notification of a prequalification amount to users for a given merchant prior to arrival at checkout.

### BACKGROUND

The financial industry is comprised of many thousands of customers, vendors, lenders, borrowers, and other role players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In recent times, merchant websites have integrated a number of different payment options that the user may choose from when arriving at checkout. With the final virtual cart amount known, the user may then select one of the payment options (e.g., credit, debit, mobile wallet, loan, etc.) and attempt to pay for the final virtual cart amount using the selected method. With many of these payment methods, however, the user could still be declined/denied, and the transaction may not be able to be completed.

It would be preferable to avoid aggravating users by serving them a denial or decline notice after very nearly reaching the finish line, and doing so would certainly improve their shopping experience. It would also help merchants by ensuring that transactions can be completed with satisfied customers who may build brand loyalty to the merchant as a result. Getting to a point where that is possible, or even normal, requires technical changes to the user experience. This technical problem is exacerbated by the fact that for some payment options, such as provision of a loan, the lender is typically only informed of the details of the transaction at the very end of the process, i.e., at checkout.

Example embodiments are aimed at reducing the transactional friction described above by creating a technical platform that uses intelligent technical means by which to not only improve the user experience, but also do so using relatively automated tools that prequalify users farther up-funnel.

### BRIEF SUMMARY OF SOME EXAMPLES

Accordingly, some example embodiments may enable the provision of technical means by which to give a facilitator of loans the ability to integrate into an ecosystem for supporting commerce between merchants and customers, and employ technical tools that are able to inform customers of their prequalification amount for a loan with a given merchant (or group of merchants) that can be relied upon at checkout.

In an example embodiment, a method of facilitating communication of proactive prequalification for financing to customers may be provided. The method may include determining a set of eligible candidate customers for proactive loan prequalification, performing credit determinations on the set of eligible candidate customers to identify a set of selected candidates to receive a proactive guarantee of financing, and communicating a qualification notification to at least some of the set of selected candidates indicating the proactive guarantee of financing. The method may further include, responsive to receiving an indication of a transaction associated with the qualification notification, and meeting parameters defined in association with the qualification notification, facilitating a loan to a customer initiating the transaction.

In another example embodiment, an apparatus for facilitating communication of proactive prequalification for financing to customers may be provided. The apparatus may include processing circuitry configured for determining a set of eligible candidate customers for proactive loan prequalification, performing credit determinations on the set of eligible candidate customers to identify a set of selected candidates to receive a proactive guarantee of financing, and communicating a qualification notification to at least some of the set of selected candidates indicating the proactive guarantee of financing. The processing circuitry may further, responsive to receiving an indication of a transaction associated with the qualification notification, and meeting parameters defined in association with the qualification notification, facilitate a loan to a customer initiating the transaction.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram of various examples of prequalification notifications in accordance with an example embodiment;
FIG. 4 illustrates a web page having a prequalification dashboard in accordance with an example embodiment;
FIG. 5 is a flow diagram showing processing associated with communicating prequalification notifications in accordance with an example embodiment; and
FIG. 6 illustrates a block diagram of a method for facilitating communication of proactive prequalification for financing to customers in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage individual transactions before, during and also sometimes after the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time with added flexibility to determine terms upon which each transaction will be executed with participating merchants.

The technical platform described herein, however, further streamlines integration of merchants who wish to participate as a member of the ecosystem created by example embodiments by providing customers on a website or application of the facilitator with tools that enable the customers to proactively view the financing possibilities that can be accessed to their advantage for each of a plurality of merchants. In particular, customers may be enabled to see a merchant-specific prequalification amount for which the customer can fully expect loan approval when the customer reaches the checkout page of the corresponding merchant(s). For example, instead of merely having a passive platform that enables merchants who desire to become members of the ecosystem to become members and take payments within the system, example embodiments will provide a technical means by which to give the customers advanced information regarding prequalification for loans specific to the merchants (and in some cases specific to brands or products sold by the merchants) to make it comfortable for customers to leverage the financing services accessible via the platform and drive sales in a way that is relatively seamless and easy. The creation of a technical platform that proactively empowers customers with advanced knowledge of their prequalified loan amounts on a merchant by merchant basis and, in some cases, specific to the products offered, may improve the customer shopping experience and drive loyalty to both the merchant (or its brands) and to the facilitator. Thus, for example, the customers who are eligible can qualify for certain loan amounts, and get corresponding proactive information to enable the customers to have an improved user experience by being sure that any sales, offers or other marketing materials that merchants send to them can be taken advantage of with improved confidence that financing may be available at checkout based on the advanced knowledge provided to them by the facilitator. This paradigm may allow the merchants to more easily access the customers they seek to engage with, and may also do so without requiring personnel or expense to be dedicated to interacting with them. Thus, more merchants can engage more customers to drive more sales, using less resources by the merchants, based on their access to and participation with the facilitator's platform, but while using resources and services provided by the facilitator's platform. Not only may example embodiments expand the ecosystem in which customers (many of whom may wish to utilize the platform to make purchases via buy now, pay later (BNPL) or installment financing) can engage in transactions with merchants, but the engagement can be enhanced through technical means to more efficient affect, and at far lower cost without any sacrifice in service. This may drive more sales for participating merchants, and more satisfaction for the customers. As such, one platform, managed by the facilitator, may be provided for the interaction of multiple parties to enable usage of the platform to provide a flexible and yet cohesive experience for customers that maximizes responsible access to financial freedom and satisfaction.

Example embodiments not only provide the SFP platform, but also provide various enabling technologies that may facilitate operation of the SFP platform itself or of modules that may interact with the SFP platform for processing transactions amongst parties that engage with, or are members, of the ecosystem created by the SFP platform. Example embodiments therefore provide the SFP platform, supporting structures and technologies for its use, and also for processing transactions between members (e.g., lenders, customers and merchants). Moreover, as noted above, the SFP platform further takes an active role in identifying a level at which various merchants are eligible to participate in the SFP platform, and engages with such merchants in order to facilitate their easy access to participating in the ecosystem and to the customers who are also members of the ecosystem. In other words, example embodiments may also provide for enhancement of functionalities associated with the environment that is created by the SFP platform, particularly in relation to the enabling of merchants that become members of or participants in the ecosystem of the SFP platform to engage with customers via sales, offers or other marketing efforts (all referred to herein generally as examples of marketing events) for which tools to facilitate generation of content associated with the sales, offers or other marketing efforts are provided via the SFP platform. The SFP platform may therefore provide a technical mechanism by which to enhance commerce in a responsible way that is both empathetic and empowering to customers and merchants.

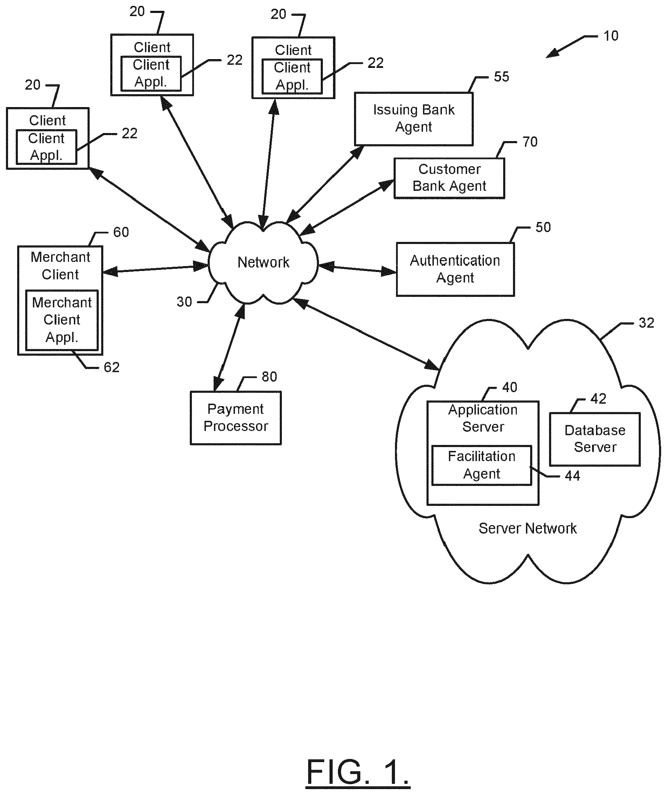

An example embodiment will now be described in reference to FIG. 1, which illustrates an example system in which an embodiment of the present invention may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the SFP platform 10. Furthermore, in some cases, some embodiments may be practiced on a single client without any connection to the SFP platform 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below. In an example embodiment, the client application 22 may be employed to request financing to make a purchase with a merchant or vendor, as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the SFP platform 10, and more particularly relating to facilitating transactions where the parties to the transaction are members of the ecosystem formed by the SFP platform 10. For example, the application server 40 may be configured to provide for storage of information descriptive of events or activities associated with the SFP platform 10 and the execution of a financial transaction on behalf of a customer in real time. In some cases, data and/or services may be exchanged amongst members, where specific needs or desires of the members are aligned with respect to playing their respective roles in connection with conducting a financial transaction using tools of the SFP platform 10 as described herein.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download to execute functionalities described herein in a client/server relationship.

In an example embodiment, the client application 22 may therefore include application programming interfaces (APIs) and other web interfaces to enable the client 20 to conduct business or transactions via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may be a web application or website that may enable the customer to review monthly statements, request a loan, change settings associated with parameters or terms of the loan, make payments, access or adjust information associated with the customer account, or receive help or other information. Budgeting tools and other useful information and other useful tools for managing the finances of the customer may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a merchant client 60, a customer bank agent 70, and a payment processor 80. The facilitation agent 44 may be configured to interact with, or otherwise facilitate interactions between, each of the bank authentication agent 50, the issuing bank agent 55, the merchant client 60, the customer bank agent 70, and the payment processor 80 in order to carry out example embodiments as described herein. Thus, each of the bank authentication agent 50, the issuing bank agent 55, the merchant client 60, the customer bank agent 70, and the payment processor 80 should be understood to be a computer, server, smart phone, or other technical component or module associated with a respective party (e.g., an authenticating bank, issuing bank, a vendor, a customer bank, and a payment service, respectively) that is capable of communication with other parties via the network 30, and under control of or responsive to facilitating communication by the facilitation agent 44.

The merchant client 60 may be similar to the client 20 described above, in some cases, except that the merchant client 60 may be associated with a merchant or vendor instead of a customer. The merchant client 60 may therefore also include a downloadable client application (e.g., merchant client application 62) similar to the client application 22 described above. However, the function of the merchant client application 62 may further interface with the facilitation agent 44 as described in greater detail below in order to handle onboarding of the merchant into the ecosystem of the SFP platform 10, and further integration of the merchant thereafter.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of credit to the customer on behalf of the facilitation agent 44 and be responsible for directly paying the merchants and vendors during a transaction initiated by the customer via the operation of the SFP platform 10.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenticator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may apply via the facilitation agent 44 to enroll as a member of the SFP platform 10 and enable the customer to make purchases via transactions arranged in association with the facilitation agent 44 using, for example, online payment processing, a virtual card, a physical credit or debit card, or other payment method where the facilitator arranges for the issuing bank to issue a loan (e.g., an installment loan or conventional loan) to the customer and advances funds to the merchant associated with the merchant client 60 on behalf of the customer. During application, subscription or registration for the SFP platform 10, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44. Credit checks or other activities enabling the customer to be approved for issuance of the virtual card may then be accomplished by the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. Payments may be provided to the merchant or vendor on behalf of the customer when making a purchase, and the corresponding amount of the purchase may be converted into a loan (e.g., an installment loan or other loan) for the customer. Payments may also or alternatively be made by the customer to service the loan via the payment processor 80.

The customer bank agent 70 may change for each respective one of the clients 20 (and therefore for each respective customer). Similarly, the merchant client 60 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a merchant or vendor associated with the merchant client 60 either online or in-store using payment method arranged by the facilitator for the customer. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and determining credit limits or making credit extension decisions. In some cases, a similar process may also be followed for merchants or vendors to facilitate taking payments from or providing payments to merchants or vendors.

Regardless of how the transactions are initiated, the SFP platform 10 of FIG. 1 may be used before, during and after the time of the transaction in order to enable the facilitation agent 44 to set up the user account for a customer, make determinations necessary to initiate the transactions in real time responsive to initiation of the transaction, and facilitate enabling the customer and to determine the treatment of transactions thereafter. Each of these activities may have its own respective timing and communications that are facilitated by the facilitation agent 44. However, example embodiments may further effectively and efficiently manage the onboarding of merchants into the ecosystem as well. Thus, more merchants may become part of the ecosystem thereby enriching the experience for customers by enhancing the number of ecosystem participants and therefore the number of opportunities for advantageous engagement between members of the ecosystem. Notably, in some embodiments, support for transactions may not be limited only to merchants that are members of the ecosystem. However, by becoming a member of the ecosystem, merchants may be enabled to offer more services, enhancements, offers, and enticements to customers. Thus, the member merchants may be empowered to attract more customers through engagement enabled by the SFP platform 10 (e.g., via enhanced tool kits, information about customers, or access). Thus, again, enriching the ecosystem provides improved outcomes for all members or participants in the ecosystem.

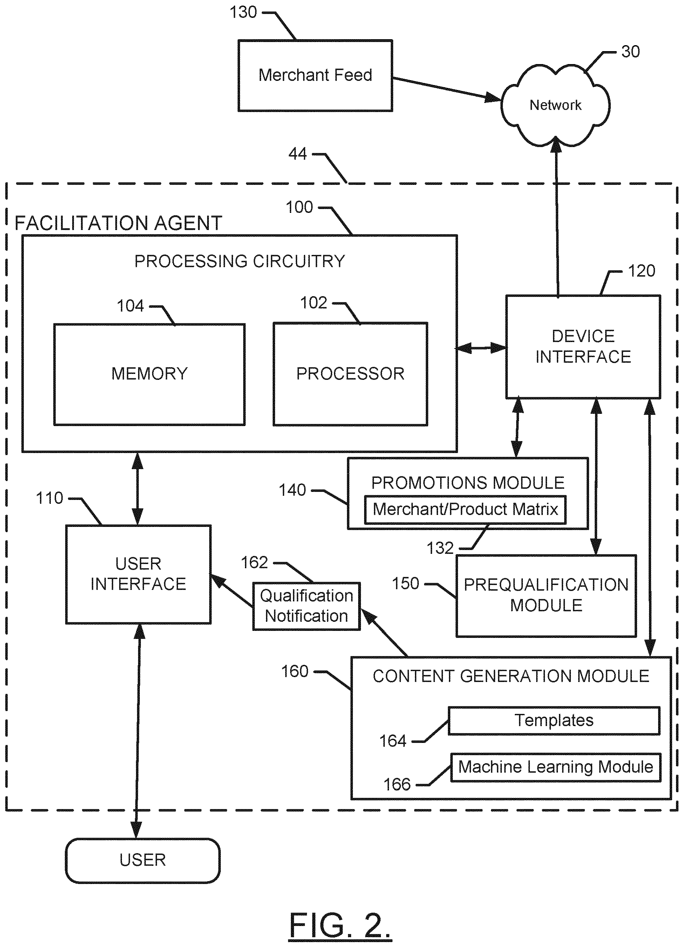

Among the empowering enhancements offered to member merchants mentioned above, the ability to provide prequalification information for merchant specific loans (and sometimes brand or product specific loans) to customers may be included. In this regard, for example, the facilitator (e.g., via the facilitation agent 44, and while the customer is one a website or application associated therewith) may dynamically and proactively produce one or more merchant-specific prequalification determinations for the customer, and inform the customer regarding the same. The customer may effectively, while in contact with the facilitator, be apprised of opportunities to obtain financing up to the prequalified amount (or amounts) listed when shopping with the corresponding merchants. Thus, instead of needing to get all the way to checkout with a corresponding one of the merchants with a virtual cart amount, and then attempt to get financing, the customer may begin the shopping experience with the improved confidence of knowing that the customer may be approved for financing using the facilitator's services at checkout with the merchant (or merchants) that had prequalified status indications provided to the customer while on the website or web application of the facilitator. This may drive customer satisfaction and brand loyalty, as noted above. Various examples of structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20/merchant clients 60). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform 10 hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located. For example, in some cases, the user interface 110 may be disposed at a remote device (e.g., the client 20/merchant client 60) and may therefore be operable through communication via the network 30.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more nontransitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a service application configured to interface with the client application 22/merchant client application 62) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer, merchant or user accounts (and a corresponding profile for each), the provision of tools to enable merchants to define marketing programs, incentives, sales, etc., the means by which customers can engage merchants to pay for services (e.g., financed by a loan such as an installment loan), and the coordination of communication and fund transfers to support the operations of the SFP platform 10 as described herein. The tools may be provided in the form of various modules that may be instantiated by configuration of the processing circuitry 100. Many of those tools may relate to aspects that are outside the scope of this disclosure, and therefore will not be discussed specifically herein. Instead, FIG. 2 illustrates some examples of modules that may be included in the facilitation agent 44 and that may be individually configured to perform one or more of the individual tasks or functions generally attributable to the facilitation agent 44 according to an example embodiment and relevant to the focus of this disclosure. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

After a merchant account has been established, the merchant having the corresponding merchant account may be considered to be a "member merchant" since the corresponding merchant is integrated into the ecosystem mentioned above. Thereafter, the merchant (i.e., the member merchant) may, via the network 30, provide a merchant feed 130 to the facilitation agent 44. The merchant feed 130 may include information identifying marketing, promotional, advertising, etc., efforts being undertaken by the member merchant. For example, sales on specific brands, or specific products (e.g., identified at the stock keeping unit (SKU) level) may be provided in the merchant feed 130 along with corresponding dates, price reduction details, or other information that defines the sales. Thus, in some cases, the merchant feed 130 may include information regarding price, manufacturer, color, style, type, and size of various products being promoted by the member merchant for a defined period of time. The merchant feed 130 may also include information regarding incentives the member merchant is willing to cooperate with the facilitator to provide to enhance lending opportunities for the facilitator, or provide rewards to customers. For example, the merchant feed 130 may identify zero interest financing, specific expanded financing limits, cash back, free shipping, redeemable points or other reward options that the member merchant is willing to cooperate with the facilitator to provide to customers.

In an example embodiment, the merchant feed 130 for each respective one of the member merchants may be provided (again via the network 30) to the facilitation agent 44 and stored thereat (e.g., at the memory 104 and/or one or more modules of the facilitation agent 44) in the form of a merchant/product matrix 132. The merchant/product matrix 132 may define a matrix of merchants and, for each merchant, the products and corresponding promotional details associated with the products and timing associated with the promotional details. Thus, the merchant/product matrix 132 is, for each respective one of the merchants, a dynamically changing database of promotional information that the member merchants can utilize the facilitator to disseminate to potential customers through the cooperative platform provided by the facilitation agent 44. Notably, this promotional channel is in addition to any other channels the member merchants might otherwise be using. However, this promotional channel provides the added benefit of being a channel that is directly associated with customers who have a relationship with the facilitator, and therefore likely also have access to financing to buy promoted products of the member merchant. Accordingly, the customers reachable through this promotional channel are perhaps not only more poised to shop, but if shopping are more likely to close transactions with the member merchant in cooperation with the facilitator.

As shown in FIG. 2, the facilitation agent 44 may include a promotions module 140, a prequalification module 150 and a content generation module 160. The promotions module 140 may, in some cases, store or otherwise have access to the merchant/product matrix 132. Moreover, in some embodiments, the promotions module 140 may be configured to receive the merchant feed 130 and generate or update the merchant/product matrix 132 based on the merchant feed 130. Accordingly, for example, the promotions module 140 may include instructions for, when executed, extracting information from the merchant feed 130 in order to build and/or update the merchant/product matrix 132. As such, the promotions module 140 may be configured to build and maintain the merchant/product matrix 132 to effectively dynamically track and record information associated with promotions, sales or the like for each respective one of the member merchants, so that the information may be in turn promoted by the facilitator to customers that are on the website or application of the facilitator.

The prequalification module 150 may be configured to perform credit modeling and make credit decisions regarding one or more offers of guaranteed or prequalified financing to multiple customers on a global or merchant-by-merchant basis. In this regard, for example, the multi-customer aspect of the prequalification module's 150 operations may be accomplished by accessing information associated with a plurality of prospective customers to evaluate. The prequalification module 150 may be configured to evaluate a set of customers that are considered initial candidates for prequalification (e.g., based on past payment history, past loan history, or other known information about the candidates). The initial candidates may then be evaluated by running the credit models and making credit decisions on the initial candidate list to identify a pool of selected candidates that are considered qualified or eligible for receiving a qualification guarantee. Thereafter, each selected candidate may receive a qualification notification 162.

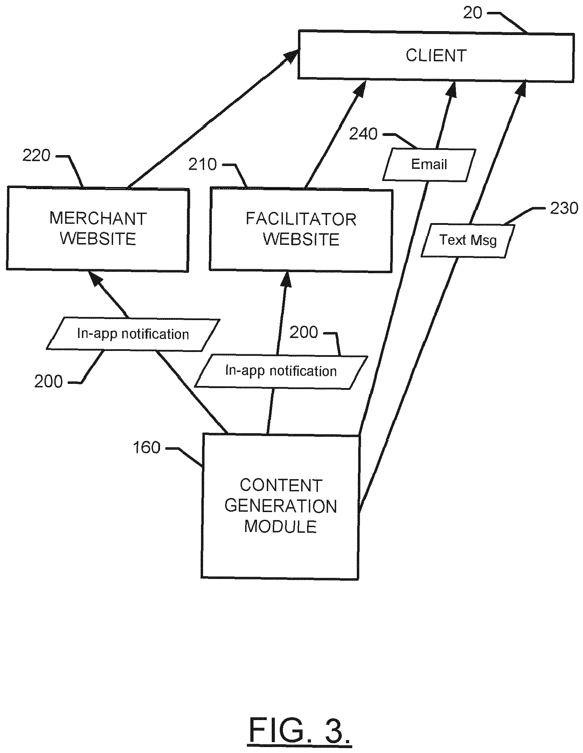

The qualification notification 162 may be processed in any of a number of different ways, some examples of which are shown in the block diagram of FIG. 3. For example, the qualification notification 162 may be an in-app notification 200 or portal notification (e.g., on the facilitator's application or facilitator website 210 or on the merchant's application or merchant website 220), a text message 230, an email message 240, or the like. For in-app notification 200, since each customer may be logged into his/her account (e.g., customer account) with the facilitation agent 44 when accessing the website or web application of the facilitator (e.g., facilitator website 210), the customer's identity may be known (and verified) by the facilitation agent 44. Access to the account balance of one or more bank accounts of the customer, and any outstanding loan balances, and loan repayment history may also be therefore known to the facilitator. In some cases, more personal profile information may also be known (e.g., salary information, etc.) if such information has been voluntarily provided by the customer. Thus, on the basis of the customer's identity (and corresponding information associated therewith), the credit models of the prequalification module 150 may be run to determine a customer prequalification amount that generically applies to the customer. This identifies a loan amount for which the customer is qualified regardless of the product, merchant, or other usage of the loan, and may be done without a formal (or hard) credit check in some cases. However, in other cases, the credit score of the customer, or a credit check, may be included in any credit extension decisions made by the prequalification module 150.

For in-app notification 200 on the merchant website 220, the merchant feed 130 may be used to further indicate when a customer is on the merchant website 220. The in-app notification 200 may then be a pop-up, banner, or other advertisement that appears on the merchant website 220. Email messages 240, text messages 230 or other types of push messages may be performed using contact information associated with the customer's profile to the client 20 associated with the customer.

The prequalification module 150 may, however, extend beyond merely performing determinations of customer prequalification amounts on a customer-by-customer basis by adding in a modification specific to each merchant, or at least some of the merchants (e.g., based on the merchant feed 130). In this regard, for example, the merchant-by-merchant aspect of the prequalification module's 150 operations may be accomplished via access to the merchant/product matrix 132. The merchant/product matrix 132 may provide the information necessary for decision making regarding amplification or increase of the customer prequalification amount based on promotional information specific to individual ones of the member merchants. Thus, in some cases, the qualification notification 162 of FIG. 2 may be provided to include a modification to the customer prequalification amount that is made based on merchant or product specific information.

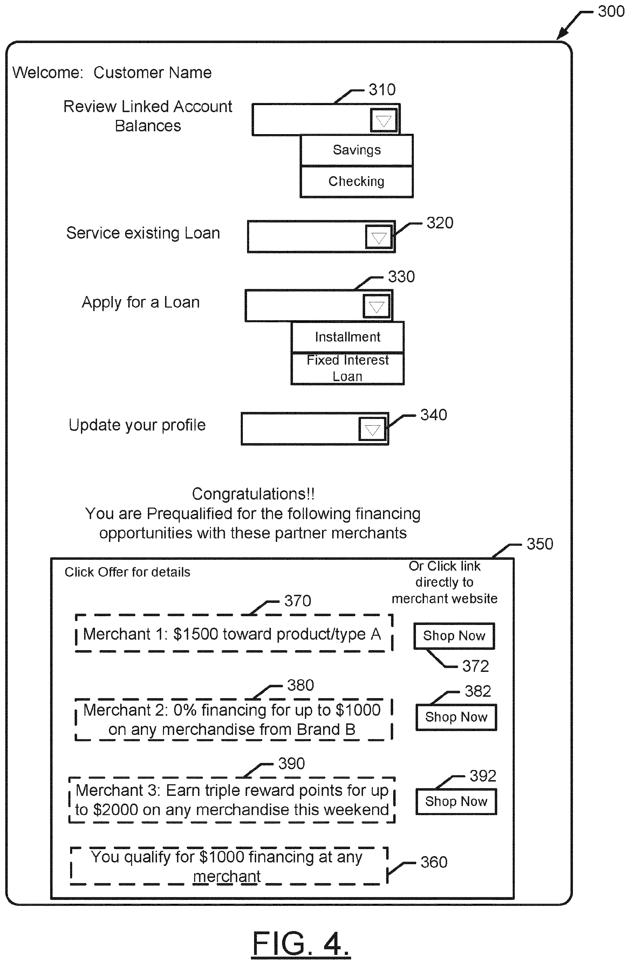

An example of a modification to the customer prequalification amount is illustrated by the web page 300 of FIG. 4. In FIG. 4, the web page 300 includes some generic information that is merely intended to associate the web page 300 with the facilitator (and therefore make the web page 300 serve as one example of the facilitator website 210 of FIG. 3. This generic information, which is non-limiting, may allow the customer to make various queries or otherwise interact with the facilitator website 210 in corresponding ways. For example, an account selector 310 may enable the customer to review one or more linked account balances, or modify other settings or connections associated with linked accounts. A loan selector 320 may be provided to enable the customer to select prior loans to service such loans (e.g., make payments, pay off, roll up multiple loans, etc.). Loan application selector 330 may be provided to enable the customer to apply for another specific loan. Profile selector 340 may link to a settings or profile page that enables the customer to change settings or profile information. Other selectors, links, information or the like may also or alternatively be presented on the web page 300.

In this example, the qualification notification 162 is an in-app notification in the form of a prequalification dashboard 350. Thus, for example, the prequalification module 150 may one or more merchant-specific or generic (global) prequalification options for which the customer is eligible and/or qualified, and those options may be provided in the prequalification dashboard 350. As an example, the prequalification module 150 may determine a customer prequalification amount of $1000 for a given customer based only on the identity of the customer and generate a first prequalification option 360 for presentation in the prequalification dashboard 350. This generic customer prequalification amount (i.e., the first prequalification option 360 may be persisted (i.e., stored) so that it effectively becomes a guarantee of qualification and acceptance that can be relied upon by the customer when the customer seeks to employ the facilitator to provide financing for online purchases (or in-store purchases with a virtual card linked to a loan). The generic customer prequalification amount of the first prequalification option 360 may also be considered to be an "anywhere" prequalification, since it is valid at any merchant. However, as noted above, the generic customer prequalification amount may also be modified for each of a plurality of merchants based on the merchant/product matrix 132.

For example, a first merchant may be willing to work with the facilitator to provide zero percent financing for a first period of time. A second merchant may provide a merchant boost of $500 for any products purchased from the second merchant for a second period of time. A third merchant may be offering 25% off merchandise of a certain brand (or certain product type) offered by the third merchant for a third period of time. Many other arrangements associated with marketing or promotion efforts may result in similar partnerships or arrangements between the facilitator and various member merchants. As noted above, the details of each of these modifications may be obtainable by referencing the merchant/product matrix 132. Based on the merchant/product matrix 132, the prequalification module 150 may determine an updated or modified customer prequalification amount for each merchant. In this example, a first modified customer prequalification amount 370 (which is a second prequalification option) for the first merchant may be $1000 with zero percent interest for the first period of time may be presented in the prequalification dashboard 350. A link 372 to the first merchant's website may also be provided to enable the customer to immediately shop with the first merchant to utilize the option. A second modified customer prequalification amount 380 (which is a third prequalification option) for the second merchant may be $1500 for the second period of time and may also be presented in the prequalification dashboard 350 along with a link 382 to the second merchant's website. A third modified customer prequalification amount 390 (which is a fourth prequalification option in this example) for the third merchant may be generated to show $1000 with 25% off the certain brand for the third period of time and may also be presented in the prequalification dashboard 350 along with a link 392 to the third merchant's website. Notifications of these respective merchant specific, modified customer prequalification amounts may be provided by the content generation module 160 via the prequalification dashboard 350 individually or simultaneously and in any order.

Thus, the content generation module 160 may be configured to generate the prequalification dashboard 350 or other listing of respective merchant-specific financing offers for which the customer is prequalified. The prequalification dashboard 350 may therefore include offers that are personalized to the customer based on the modified customer prequalification amount determined for each merchant. The prequalification dashboard 350, and each of the prequalification options included therein, are shown in an in-app context in which the application is a website of the facilitator. Any one of the prequalification options that is specific to a given merchant could also or alternatively be provided on the website of the corresponding merchant as an in-app notification as well. The generic (or anywhere) prequalification option could also or alternatively be provided on the corresponding merchant's website as an in-app notification as well.

In some embodiments, the content generation module 160 may store a number of templates 164, which may be modified according to the information provided via the merchant/product matrix 132. Each of the templates 164 may have been previously constructed in accordance with the various combinations of selectable options for preferred locations and formats for the content associated with the financing offers. The templates 164 may also have preformatted spaces into which branding elements or logos, or into which taglines or other materials provided by or associated with the merchant corresponding with each financing offer may be added into the content that is displayed in the prequalification dashboard 350.

The prequalification dashboard 350 may be a list or one or more modified customer prequalification amounts (each of which may be considered to be a prequalification option) along with an identification of the merchant (and/or brands/products) to which the modified customer prequalification amounts correspond. The prequalification dashboard 350 may be a separate page, or may be a console, window, banner, etc., that may be displayed on any other desired web page of the website or web application of the facilitator. Notably, the prequalification dashboard 350 may be one example of the qualification notification 162 shown being provided to the user interface 110 in FIG. 2. However, as noted above, sometimes the user interface 110 may be remotely located. Thus, in some cases, the prequalification dashboard 350 may be provided to the user interface of one of the clients 20 via the network 30.

In some cases, the content generation module 166 may also include a learning machine module 166 that is trained to identify products, merchants, or even offers that are more likely to be of interest to an individual customer to ensure that there is relevance associated with the qualification notification 162. For example, a shopper who typically purchases women's clothing and accessories may be unlikely to have interest in sales offered on fishing gear at a sporting goods store. The machine learning module 166 may therefore be employed to ensure that promotions are tailored to customers more likely to be interested therein.

In an example embodiment, the machine learning module 166 may include trained models that are also updateable during operation for further learning and modification. Via the trained models, the machine learning module 166 may be configured to model product, merchant, and offer relevance to individual customers based on profile information regarding the customers and based on past customer behavior and current information (e.g., via merchant feed 130 or activity on the facilitator website 210). The machine learning module 166 may therefore generate a relevance score for each prequalification offer (e.g., based on merchant, product, etc.) and, if the relevance score is above a threshold, the corresponding prequalification offer may be used to generate a qualification notification 162 (or be posted on the prequalification dashboard 350). If the corresponding prequalification offer has a relevance score below the threshold, the prequalification offer may be discarded.

Customers may also actively participate in training the machine learning module 166 by providing feedback regarding interests, even if certain options are not selected. For example, a customer may, although not accepting a prequalification offer at a given time, nevertheless be interested in receiving similar offers (e.g., for similar products, brands, merchants, etc.). The customer may, either with prompting or voluntarily, provide feedback on offers of interest even if the offers are not executed upon. Thus, for example, the customer may communicate an interest in receiving more offers of a given type, even if the customer has not yet actively pursued one of the offers. This training will again make sure the offers that are generated as examples of the qualification notification 162 have a higher degree of relevance since the models will generate a higher relevance score for offers that correspond to previously received positive feedback (and consequently lower relevance scores for negative feedback).

The first prequalification option 360, which is general, and is guaranteed for any purchase, may be unaffected by the relevance scoring paradigm discussed above since the first prequalification option 360 is effectively universally relevant. The prequalification options that are used to generate any instance of the qualification notification 162 may be persisted, stored or recorded along with the corresponding time limit or period during which they are active or redeemable. The content generation module 160 may, in some cases, be configured to provide push messages indicating an approaching expiration date/time for the qualification notification 162 in some cases to attempt to ensure that the customer does not see the qualification notification 162 while actively in a period during which the prequalification is valid, and then shop at the merchant at some later time only to be disappointed at checkout to find that the prequalification is no longer active or redeemable.

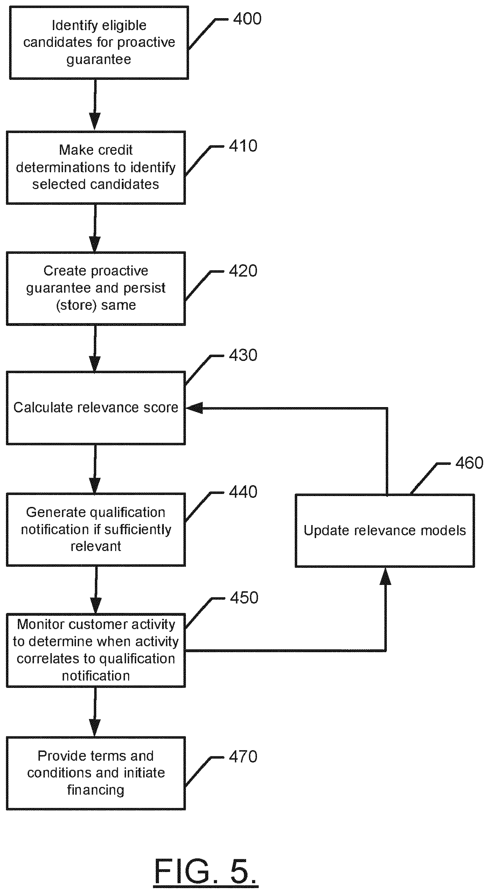

FIG. 5 illustrates a flow diagram showing one example of how processing managed by the processing circuitry 100 of an example embodiment may be handled. In this regard, for example, operation 400 relates to initial identification of eligible candidates for a proactive prequalification guarantee (or offer) regarding financing. From this initial candidate pool, a group of selected candidates may be generated by making credit determinations associated with running the credit models and decision models associated with the system, and described above as being modified for individual merchants at operation 410. For each selected customer, a corresponding proactive guarantee may be created and persisted (or stored) at operation 420. Thereafter, a relevance score may be calculated at operation 430 (e.g., via the machine learning module 166). If the relevance score is high enough (i.e., if sufficiently relevant), then a qualification notification may be generated (e.g., via any of the methods shown in FIG. 3).

At operation 450, customer activity may be monitored to determine when the activity correlates to a qualification notification. This may include the customer selecting a link to a merchant website, or when shopping at a merchant website (indicated by merchant feed 130) correlates to a qualification notification previously persisted. Customer activity may also include acceptance of a prequalification option (e.g., presented in the prequalification dashboard 350) or customer feedback received directly regarding a prequalification option that indicates a positive or negative feeling toward a particular prequalification option. The relevance models of the machine learning module 166 may then be updated at operation 460 to improve any future relevance score calculations. If the activity relates to acceptance of a particular prequalification option, terms and conditions for underwriting and loan origination may be issued and financing may be initiated via a separate workflow that is outside the scope of this disclosure at operation 470.

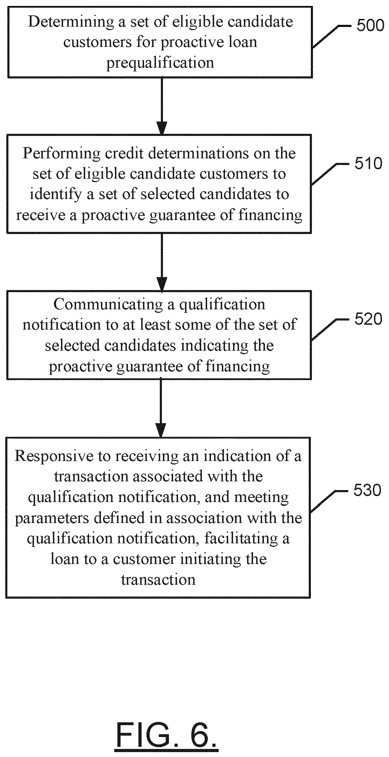

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 6 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, merchant client 60, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of facilitating communication of proactive prequalification for financing to customers is shown in FIG. 6. The method may include determining a set of eligible candidate customers for proactive loan prequalification at operation 500, performing credit determinations on the set of eligible candidate customers to identify a set of selected candidates to receive a proactive guarantee of financing at operation 510, and communicating a qualification notification to at least some of the set of selected candidates indicating the proactive guarantee of financing at operation 520. The method may further include, responsive to receiving an indication of a transaction associated with the qualification notification, and meeting parameters defined in association with the qualification notification, facilitating a loan to a customer initiating the transaction at operation 530.

In an example embodiment, an apparatus for performing the method of FIG. 6 above may comprise a processor (e.g., the processor 102) or processing circuitry configured to perform some or each of the operations (500-530) described above. The processor may, for example, be configured to perform the operations (500-530) by performing hardware implemented logical functions, executing stored instructions, or executing algorithms for performing each of the operations. In some embodiments, the processor or processing circuitry may be further configured for additional operations or optional modifications to operations 500 to 530.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the qualification notification may be an in-app notification provided at a client device of each of the at least some of the set of selected candidates. In an example embodiment, the qualification notification may be provided in a prequalification dashboard listing multiple proactive guarantees of financing, in which at least two of the multiple proactive guarantees of financing are associated with different merchants or different products. In some cases, the qualification notification may be a text message or an email message sent to a client device of each of the at least some of the set of selected candidates. In an example embodiment, the qualification notification may define a prequalification amount for which the customer is guaranteed approval for the loan. In some cases, the prequalification amount may be modified based on merchant feed from a merchant to generate a modified prequalification amount that is specific to the merchant. In an example embodiment, the modified prequalification amount may be determined based on a merchant/product matrix storing sales, marketing or promotion data associated with the merchant, a brand or a product, and a corresponding time during which the sales, marketing or promotion data is active. In some cases, the merchant/product matrix may include product information at a stock keeping unit (SKU) level. In an example embodiment, the method may further include determining a relevance score of the qualification notification to each of the set of selected candidates via a machine learning module. In such an example, communicating the qualification notification may be performed only to an individual among the set of selected candidates for which the relevance score exceeds a threshold. In some cases, the machine learning module may be updated based on customer feedback and customer activity to update relevance models employed by the machine learning module.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of facilitating communication of proactive prequalification for financing to customers, the method comprising:
determining a set of eligible candidate customers for proactive loan prequalification;
performing credit determinations on the set of eligible candidate customers to identify a set of selected candidates to receive a proactive guarantee of financing;
communicating a qualification notification to at least some of the set of selected candidates indicating the proactive guarantee of financing; and
responsive to receiving an indication of a transaction associated with the qualification notification, and meeting parameters defined in association with the qualification notification, facilitating a loan to a customer initiating the transaction.

2. The method of claim 1, wherein the qualification notification is an in-app notification provided at a client device of each of the at least some of the set of selected candidates.

3. The method of claim 2, wherein the qualification notification is provided in a prequalification dashboard listing multiple proactive guarantees of financing, at least two of the multiple proactive guarantees of financing being associated with different merchants or different products.

4. The method of claim 1, wherein the qualification notification is a text message or an email message sent to a client device of each of the at least some of the set of selected candidates.

5. The method of claim 1, wherein the qualification notification defines a prequalification amount for which the customer is guaranteed approval for the loan.

6. The method of claim 5, wherein the prequalification amount is modified based on merchant feed from a merchant to generate a modified prequalification amount that is specific to the merchant.

7. The method of claim 6, wherein the modified prequalification amount is determined based on a merchant/product matrix storing sales, marketing or promotion data associated with the merchant, a brand or a product, and a corresponding time during which the sales, marketing or promotion data is active.

8. The method of claim 7, wherein the merchant/product matrix includes product information at a stock keeping unit (SKU) level.

9. The method of claim 1, further comprising determining a relevance score of the qualification notification to each of the set of selected candidates via a machine learning module,
wherein communicating the qualification notification is performed only to an individual among the set of selected candidates for which the relevance score exceeds a threshold.

10. The method of claim 9, wherein the machine learning module is updated based on customer feedback and customer activity to update relevance models employed by the machine learning module.

11. An apparatus for facilitating communication of proactive prequalification for financing to customers, the apparatus comprising processing circuitry configured to perform the method of any claims 1-10.
